# EUROPEAN PATENT APPLICATION

(11) **EP 4 632 841 A1**
(43) Date of publication of application: **15.10.2025**
(21) Application number: 24775029.2
(22) Date of filing: 03.01.2024
(51) Int. Cl.: H01M 4/36, H01M 4/505, H01M 4/525, H01M 4/62, C01G 53/00, H01M 4/133, H01M 10/052, H01M 4/02

(54) **POSITIVE ELECTRODE ACTIVE MATERIAL, POSITIVE ELECTRODE AND LITHUM SECONDARY BATTERY COMPRISING SAME, AND METHOD FOR MANUFACTURING SAME**

(30) Priority: 17.03.2023 KR 20230035482; 21.12.2023 KR 20230188921
(71) Applicant: LG Energy Solution, Ltd., Seoul 07335 (KR)
(72) Inventor: HAN, Gi Beom, Daejeon 34122 (KR); PARK, Kang Joon, Daejeon 34122 (KR); LEE, Youshin, Daejeon 34122 (KR); LEE, Jaeyoung, Daejeon 34122 (KR); PARK, Sin Young, Daejeon 34122 (KR); PARK, Byungchun, Daejeon 34122 (KR)
(74) Representative: Hoffmann Eitle
(86) International application number: PCT/KR2024/000135
(87) International publication number: WO 2024/195981

(57) **Abstract**

A positive electrode active material according to the present disclosure includes a lithium-rich manganese-based oxide represented by the following Chemical Formula 1; and a carbon material coating layer located on the surface of the lithium-rich manganese-based oxide, wherein a BET specific surface area is 1.0 m²/g to 2.0 m²/g:

[Chemical Formula 1] Liₐ[Ni_{b}Co_{c}Mn_{d}Mₑ]O₂

in Chemical Formula 1, 1.00<a, 0≤b≤0.53, 0≤c≤0.10, 0.47≤d≤1.00, 0≤e≤0.20, and M is at least one selected from the group consisting of Al, B, Co, W, Mg, V, Ti, Zn, Ga, In, Ru, Nb, Sn, Sr and Zr.

## Description

### [TECHNICAL FIELD]

### Cross Citation with Related Application(s)

This application claims the benefit of Korean Patent Application No. 10-2023-0035482 filed on March 17, 2023 and Korean Patent Application No. 10-2023-0188921 filed on December 21, 2023 in the Korean Intellectual Property Office, the disclosures of which are incorporated herein by reference in their entirety.

The present disclosure relates to a positive electrode active material, a positive electrode and lithium secondary battery comprising the same, and a method for manufacturing the positive electrode active material, and more specifically, to a positive electrode active material having excellent capacity and rate characteristics, and a positive electrode and lithium secondary battery comprising the same.

### [BACKGROUND]

Lithium secondary batteries generally consist of a positive electrode, a negative electrode, a separator, and an electrolyte, wherein the positive electrode and the negative electrode include an active material capable of intercalation and de-intercalation of lithium ions.

As a positive electrode active material for lithium secondary batteries, lithium cobalt oxide (LiCoO₂), lithium nickel oxide (LiNiO₂), lithium manganese oxide (LiMnO₂ or LiMnO₄, etc.), lithium iron phosphate compound (LiFePO₄), and the like have been used. Among these, lithium cobalt oxide has the advantage of high operating voltage and excellent capacity characteristics, but the price of cobalt, which is a raw material, is high and its supply is unstable, which makes it difficult to apply it commercially to large-capacity batteries. Lithium nickel oxide has poor structural stability, which makes it difficult to achieve sufficient life characteristics. On the other hand, lithium manganese oxide has excellent stability, but has the problem that capacity characteristics deteriorate. Thus, lithium composite transition metal oxides containing two or more types of transition metals have been developed in order to compensate for the problems of lithium transition metal oxides containing Ni, Co, or Mn alone. Particularly, as it has become known that lithium nickel cobalt manganese oxide (hereinafter referred to as "lithium-rich manganese-based oxide"), which has a higher Mn content than that of other metals except lithium, is a high-capacity active material and can secure high energy density per unit volume, research thereon has emerged.

However, in the case of a lithium-rich manganese-based oxide containing surplus lithium, it has a structure in which a layered phase (LiM'O₂) and rock-salt phase (Li₂MnO₃) are mixed, wherein during the initial activation process, excessive lithium ions are generated while the rock-salt phase is activated. Further, an oxygen-redox reaction occurs during the activation process of the rock-salt phase, whereby a large amount of gas is generated, and deterioration of the positive electrode due to internal cracks in the active material and collapse of the crystal structure become intensified, which causes a problem that life characteristics is deteriorated.

On the other hand, lithium-rich manganese-based oxide has a problem that its rate characteristics are deteriorated. This is assumed to be because when increasing the Mn content while decreasing the Co content, the ratio of Ni²⁺ is increased, and thus the diffusion rate of lithium ions slows down due to cation mixing where Ni²⁺is substituted in the Li⁺layer, thereby increasing the resistance.

Therefore, there is a need for development of a lithium-rich manganese-based oxide that can simultaneously improve capacity characteristics and rate characteristics.

### [DETAILED DESCRIPTION OF THE INVENTION]

### [Technical Problem]

The present disclosure has been designed to solve the above-mentioned problems, and an object of the present disclosure is to provide a positive electrode active material which includes a carbon material coating layer with a specific content on the surface of lithium-rich manganese-based oxide.

Another object of the present disclosure is to provide a positive electrode and a lithium secondary battery, which include a positive electrode active material, and thus are improved in electrochemical characteristics.

### [Technical Solution]

In one aspect of the present disclosure, there is provided a positive electrode active material comprising: a lithium-rich manganese-based oxide represented by the following Chemical Formula 1; and a carbon material coating layer located on the surface of the lithium-rich manganese-based oxide, wherein a BET specific surface area is 1.0 m²/g to 2.0 m²/g:

[Chemical Formula 1] Liₐ[Ni_{b}Co_{c}Mn_{d}Mₑ]O₂

in Chemical Formula 1, 1.00<a, 0≤b≤0.53, 0≤c≤0.10, 0.47≤d≤1.00, 0≤e≤0.20, and M is at least one selected from the group consisting of Al, B, Co, W, Mg, V, Ti, Zn, Ga, In, Ru, Nb, Sn, Sr and Zr.

In Chemical Formula 1, 1.10≤a≤1.5, 0.10≤b≤0.40, 0≤c≤0.05, 0.47≤d≤0.80, and 0≤e≤0.10.

In Chemical Formula 1, 1.12<a<1.18, 0.24<b<0.36, 0<c<0.10, 0.47≤d<0.63, 0<e<0.05, and M may be at least one selected from the group consisting of Al, Mg, V, Ti, Zr, Nb and W.

Meanwhile, the lithium-rich manganese-based oxide may have a structure in which Li₂MnO₃ phase having a rock salt structure and LiM'O₂ phase having a layered structure are mixed, and may be, for example, represented by the following Chemical Formula 2:

[Chemical Formula 2] X Li₂MnO₃ · (1-X)Li[Ni_{l-y-z-w}Mn_{y}Co_{z}M_{w}]O₂

in [Chemical Formula 2], 0.2≤X≤0.5, 0.4≤y<1, 0≤z≤0.1, 0≤w≤0.2, and M is at least one selected from the group consisting of Al, B, Co, W, Mg, V, Ti, Zn, Ga, In, Ru, Nb, Sn, Sr and Zr.

The carbon material coating layer may be amorphous.

The carbon material coating layer may include at least one selected from the group consisting of carbon nanotubes, carbon nanofibers, carbon nanoribbons, carbon nanobelts, carbon nanorods, graphene, graphene oxide, reduced graphene oxide, carbon black, activated carbon and mesoporous carbon.

The content of the carbon material coating layer may be 0.5 parts by weight to 10 parts by weight based on 100 parts by weight of the lithium-rich manganese-based oxide. The positive electrode active material may have a D₅₀ of 1 µm to 20 µm.

The positive electrode active material may have an electrical conductivity of 2.0×10⁻³ S/cm to 5.0×10⁻³ S/cm.

In another aspect, there is provided a positive electrode comprising the above-mentioned positive electrode active material.

In another aspect, there is provided a lithium secondary battery comprising a positive electrode, a negative electrode, a separator and an electrolyte, wherein the positive electrode includes a positive electrode active material layer containing the above-mentioned positive electrode active material.

The ratio of the discharge capacity during the 0.33C charging and discharging to the discharge capacity during the 0.1C charging and discharging of the lithium secondary battery may be 94.0% to 99.0%.

In yet another aspect, there is provided a method for manufacturing a positive electrode active material, the method comprising the steps of: (A) preparing a lithium-rich manganese-based oxide represented by the following Chemical Formula 1; and (B) forming a carbon material coating layer located on the surface of the lithium-rich manganese-based oxide by mixing the lithium-rich manganese-based oxide and a carbon material, wherein the content of the carbon material coating layer is 0.5 parts by weight to 10 parts by weight based on 100 parts by weight of the lithium-rich manganese-based oxide:

[Chemical Formula 1] Liₐ[Ni_{b}Co_{c}Mn_{d}Mₑ]O₂

in Chemical Formula 1, 1.00<a, 0≤b≤0.53, 0≤c≤0.10, 0.47≤d≤1.00, 0≤e≤0.20, and M is at least one selected from the group consisting of Al, B, Co, W, Mg, V, Ti, Zn, Ga, In, Ru, Nb, Sn, Sr and Zr.

In step (B), the carbon material coating layer may be formed on the surface of the lithium-rich manganese-based oxide by applying a shearing force.

### [Advantageous Effects]

The present invention can simultaneously improve the electrical conductivity and the rate characteristics of the surface of the positive electrode active material by including a carbon material coating layer with a specific content on the surface of the lithium-rich manganese-based oxide. The rate characteristics of the positive electrode are affected by the electrical conductivity and ionic conductivity inside the positive electrode, wherein as the electrical conductivity of the positive electrode active material constituting the positive electrode improves, it can achieve improvement in the electrical conductivity and rate characteristics of the positive electrode.

In addition, since the positive electrode active material according to the present disclosure includes a carbon material coating layer having excellent conductivity on its surface, it is possible to achieve excellent electrical conductivity, either without adding a separate conductive material or even with only a small amount of conductive material when manufacturing the electrode. Thereby, it is possible to increase the amount of the positive electrode active material contained in the electrode, thereby increasing the energy density.

### [DETAILED DESCRIPTION OF THE EMBODIMENTS]

Advantages and features of the present disclosure and methods of accomplishing the same may be understood more readily by reference to the following detailed description of preferred embodiments and the accompanying drawings. The present disclosure may, however, be embodied in many different forms and should not be construed as being limited to the embodiments set forth herein. Rather, such embodiments are provided so that this disclosure will be thorough and complete and will fully convey the concept of the invention to those skilled in the art, and the present disclosure will only be defined by the appended claims. The same reference numerals will be used throughout to designate the same or like elements.

Unless defined otherwise, all terms (including technical and scientific terms) used herein may be used as meanings that can be commonly understood by those of ordinary skill in the art to which the present disclosure belongs. In addition, terms defined in a commonly used dictionary are not interpreted ideally or excessively unless specifically explicitly defined.

The terms used herein are provided to describe the embodiments but not to limit the inventive concept. In the specification, the singular forms include plural forms unless the context clearly indicates otherwise. The terms "comprises" and/or "comprising" used herein does not exclude the existence or the addition of one or more elements other than those mentioned.

Throughout the description, when a portion is referred to as "including" or "comprising" a certain component, it means that the portion can further include other components, without excluding the other components, unless otherwise stated.

As used herein, "specific surface area" is measured by a BET (Brunauer-Emmett-Teller) method, and particularly, may be calculated from the adsorption amount of nitrogen gas under a liquid nitrogen temperature (77K) by using BELSORP-mini II available from BEL Japan Inc.

As used herein, "D₅₀" means a particle size on the basis of 50% in the volume cumulative particle size distribution of the positive electrode active material. The D₅₀ may be determined by using a laser diffraction method by way of example. For example, the D₅₀ may be determined by dispersing a positive electrode active material powder in a dispersion medium, introducing the resultant dispersion to a commercially available laser diffraction particle size analyzer (e.g. Microtrac MT 3000), irradiating ultrasonic waves of about 28 kHz at an output of 60 W to obtain a graph of volume cumulative particle size distribution, and then determining the particle size corresponding to 50% of the cumulative volume.

The present disclosure will be described in more detail below.

### Positive electrode active material

A positive electrode active material according to the present disclosure includes a lithium-rich manganese-based oxide represented by the following Chemical Formula 1; and a carbon material coating layer located on the surface of the lithium-rich manganese-based oxide, wherein a BET specific surface area may be 1.0 m²/g to 2.0 m²/g:

[Chemical Formula 1] Liₐ[Ni_{b}Co_{c}Mn_{d}Mₑ]O₂

in Chemical Formula 1, M may be at least one selected from the group consisting of Al, B, Co, W, Mg, V, Ti, Zn, Ga, In, Ru, Nb, Sn, Sr and Zr. Preferably, M may be at least one selected from the group consisting of Al, W, Mg, V, Ti, Zr, and Nb.

Meanwhile, a is the molar ratio of Li in the lithium-rich manganese-based oxide, which may be 1.00<a, 1.10 ≤ a ≤ 1.5, or 1.12<a<1.18. When a satisfies the above range, high capacity characteristics and high energy density per unit volume can be achieved.

The b is the molar ratio of Ni in the lithium-rich manganese-based oxide, which may be 0 ≤ b ≤ 0.53, 0.10 ≤ b ≤ 0.40, or 0.24<b<0.36.

The c is the molar ratio of Co in the lithium-rich manganese-based oxide, which may be 0 ≤ c ≤ 0.10, 0 ≤ c ≤ 0.05, or 0<c<0.10. When c exceeds 0.1, it is difficult to secure a high capacity, generation of gas and deterioration of the positive electrode active material become intensified, which may be deteriorated in life characteristics.

The d is the molar ratio of Mn in the lithium-rich manganese-based oxide, which may be 0.47 ≤ d ≤ 1.00, 0.47 ≤ d ≤ 0.80, or 0.47 ≤ d<0.63. When d is less than 0.47, the ratio of the rock-salt phase becomes too small, and thus the capacity improvement effect is insignificant.

The e is the molar ratio of the doping element M in the lithium-rich manganese-based oxide, which may be 0 ≤ e ≤ 0.20, 0 ≤ e ≤ 0.10, or 0<e<0.05. When the content of the doping element is too high, it may adversely affect the capacity of the active material.

In the case of a lithium-rich manganese-based oxide containing surplus lithium, it has a structure in which a layered phase (LiM'O₂) and rock-salt phase (Li₂MnO₃) are mixed, wherein during the initial activation process, excessive lithium ions are generated while the rock-salt phase is activated. Further, an oxygen-redox reaction occurs during the activation process of the rock-salt phase, whereby a large amount of gas is generated, and deterioration of the positive electrode due to internal cracks in the active material and collapse of the crystal structure become intensified, which causes a problem that life characteristics is deteriorated.

On the other hand, lithium-rich manganese-based oxide has a problem that its rate characteristics are deteriorated. This is assumed to be because when increasing the Mn content while decreasing the Co content, the ratio of Ni²⁺ is increased, and thus the diffusion rate of lithium ions slows down due to cation mixing where Ni²⁺is substituted in the Li⁺ layer, thereby increasing the resistance.

As a result of continued investigation for solving such problems, the present inventors have found that as a coating layer containing a carbon material having excellent conductivity (hereinafter referred to as a 'carbon material coating layer') is formed on the surface of the lithium-rich manganese-based oxide, it is possible to improve electrical conductivity, limit the content of the carbon material coating layer to a certain range, and thus improve rate characteristics at the same time, and completed the present disclosure.

Further, since the positive electrode active material according to the present disclosure includes a carbon material coating layer having excellent conductivity on its surface, it is possible to achieve excellent electrical conductivity, either without adding a separate conductive material or with only a small amount of conductive material when manufacturing the electrode. Thereby, it is possible to increase the amount of the positive electrode active material contained in the electrode, thereby increasing the energy density.

The content of the carbon material coating layer according to the present disclosure may be 0.5 parts by weight to 10 parts by weight, preferably 1 part by weight to 8 parts by weight, more preferably 1 part by weight to 6 parts by weight, based on 100 parts by weight of the lithium-rich manganese-based oxide. As the content of the carbon material coating layer increases, the electrical conductivity may be increased, but rate characteristics may be decreased. Thus, this may be anticipated that lithium ions cannot directly pass through the carbon material coating layer, and must move through the electrolyte filled in the carbon material coating layer, whereby as the content of the carbon material coating layer is higher, the internal curvature is higher, which impedes the movement of lithium ions, and this effect is reflected in the decrease in rate characteristics.

Further, as the content of the carbon material coating layer increases, the ratio of the positive electrode active material in the electrode decreases, which results in a decrease in energy density. It is preferable that only the minimum carbon material content capable of exhibiting optimal conditions for improving the electrical conductivity of the electrode is applied to the coating layer.

Meanwhile, the lithium-rich manganese-based oxide may be represented by the following Chemical Formula 2:

[Chemical Formula 2] X Li₂MnO₃ · (1-X)Li[Ni_{l-y-z-w}Mn_{y}Co_{z}M_{w}]O₂

in Chemical Formula 2, M is at least one selected from the group consisting of Al, B, Co, W, Mg, V, Ti, Zn, Ga, In, Ru, Nb, Sn, Sr and Zr.

The X means the ratio of the rock-salt phase (Li₂MnO₃) in the lithium-rich manganese-based oxide, which may be 0.2 ≤ X ≤ 0.5, 0.25 ≤ X ≤ 0.5, or 0.25 ≤ X ≤ 0.4. When the ratio of the rock-salt phase (Li₂MnO₃) in the lithium-rich manganese-based oxide satisfies the above range, it is possible to realize high capacity characteristics.

The y is the molar ratio of Mn in the layered phase (LiM'O₂), which may be 0.4 ≤ y<1, 0.4 ≤ y ≤ 0.8, or 0.4 ≤ y ≤ 0.7.

The z is the molar ratio of Co in the layered phase (LiM'O₂), which may be 0 ≤ z ≤ 0.1, 0 ≤ z ≤ 0.08, or 0 ≤ z ≤ 0.05. When z exceeds 0.1, generation of gas and deterioration of the positive electrode active material become intensified, which results in a decrease in life characteristics.

The w is the molar ratio of the doping element M in the layered phase (LiM'O₂), which may be 0 ≤ w ≤ 0.2, 0 ≤ w ≤ 0.1, or 0 ≤ w ≤ 0.05.

Meanwhile, according to an embodiment of the present disclosure, the carbon material coating layer may be amorphous. When driven with a high voltage, there is a problem that gas is generated due to side reactions of carbon, but when the carbon material coating layer is amorphous, the amount of gas generated may be reduced.

The carbon material coating layer may include at least one selected from the group consisting of carbon nanotubes, carbon nanofibers, carbon nanoribbons, carbon nanobelts, carbon nanorods, graphene, graphene oxide, reduced graphene oxide, carbon black, activated carbon and mesoporous carbon. The positive electrode active material according to the present disclosure includes a conductive carbon material, and thus, can improve the electrical conductivity of the surface of the positive electrode active material, make the diffusion path of lithium ions smooth, and thus improve rate characteristics.

Meanwhile, the positive electrode active material according to an embodiment of the present disclosure may have a BET specific surface area of 0.5 m²/g to 10.0 m²/g, preferably 0.5 m²/g to 8.0 m²/g, more preferably 0.5 m²/g to 5.0 m²/g, more preferably 1.0 m²/g to 2.0 m²/g. When the BET specific surface area of the positive electrode active material is less than 1m²/g, the reaction area with the electrolyte is insufficient, which makes it difficult to achieve sufficient capacity. When the BET specific surface area exceeds 2.0 m²/g, there is a problem that the moisture absorption is rapid, the adhesive force at the time of manufacturing the electrode is reduced, or side reactions with electrolyte are accelerated during driving of an electrode, which makes it difficult to ensure life characteristics.

Further, the positive electrode active material according to an embodiment of the present disclosure may be in the form of secondary particles in which a plurality of primary particles are aggregated, wherein the average particle size D₅₀ of the secondary particles may be 1 µm to 20 µm, preferably 3 µm to 15 µm, more preferably 5 µm to 12 µm. When the D₅₀ of the positive electrode active material satisfies the above range, excellent electrode density can be achieved and degradation of capacity characteristics and rate characteristics can be minimized.

### Method for manufacturing positive electrode active material

The positive electrode active material according to an embodiment of the present disclosure can be manufactured by the following method. However, the present disclosure is not limited thereto.

Specifically, a method for manufacturing a positive electrode active material according to the present disclosure comprises the steps of: (A) preparing a lithium-rich manganese-based oxide represented by the following Chemical Formula 1; and (B) forming a carbon material coating layer located on the surface of the lithium-rich manganese-based oxide by mixing the lithium-rich manganese-based oxide and a carbon material, wherein the content of the carbon material coating layer is 0.5 parts by weight to 10 parts by weight based on 100 parts by weight of the lithium-rich manganese-based oxide:

[Chemical Formula 1] Liₐ[Ni_{b}Co_{c}Mn_{d}Mₑ]O₂

in Chemical Formula 1, 1.00<a, 0≤b≤0.53, 0≤c≤0.10, 0.47≤d≤1.00, 0≤e≤0.20, and M is at least one selected from the group consisting of Al, B, Co, W, Mg, V, Ti, Zn, Ga, In, Ru, Nb, Sn, Sr and Zr.

The method for manufacturing a positive electrode active material will be further described step by step.

### (A) Step of preparing a lithium-rich manganese-based oxide

First, the lithium-rich manganese-based oxide according to the present disclosure can be used by purchasing a commercially available lithium-rich manganese-based oxide, or can be prepared according to a method for preparing a lithium-rich manganese-based oxide known in the art.

For example, the lithium-rich manganese-based oxide can be prepared by mixing a transition metal precursor and a lithium raw material and then firing the mixture.

As the lithium raw material, for example, lithium-containing carbonates (e.g., lithium carbonate, etc.), hydrates (e.g., lithium hydroxide hydrate (LiOH·H₂O), etc.), hydroxides (e.g., lithium hydroxide, etc.), nitrates (e.g., lithium nitrate (LiNO₃), etc.), chlorides (e.g., lithium chloride (LiCl), etc.), and the like can be used, and among these, one type alone or a mixture of two or more types can be used.

On the other hand, the transition metal precursor may be in the form of hydroxides, oxides, or carbonates. When the precursor in the form of carbonates is used, it is more preferable in that a positive electrode active material with a relatively high specific surface area can be prepared.

The transition metal precursor can be prepared by a co-precipitation process. For example, the transition metal precursor can be prepared by dissolving each transition metal-containing raw material in a solvent to prepare a metal solution, then mixing the metal solution, an ammonium cation complex forming agent, and a basic compound, and then proceeding a coprecipitation reaction. Further, if necessary, an oxidizing agent or oxygen gas may be further added during the coprecipitation reaction.

At this time, the transition metal-containing raw material may be acetate, carbonate, nitrate, sulfate, halide, sulfide, and the like of each transition metal. Specifically, the transition metal-containing raw material may be NiO, NiCO₃·2Ni(OH)₂·4H₂O, NiC₂O₂·2H₂O, Ni(NO₃)₂·6H₂O, NiSO₄, NiSO₄·6H₂O, Mn₂O₃, MnO₂, Mn₃O₄, MnCO₃, Mn(NO₃)₂, MnSO₄ H₂O, manganese acetate, manganese halide, cobalt oxide, cobalt sulfate, cobalt nitrate, cobalt acetate, cobalt halide, and the like.

The ammonium cation complex forming agent may be at least one selected from the group consisting of NH₄OH, (NH₄)₂SO₄, NH₄NO₃, NH₄Cl, CH₃COONH₄, and NH₄CO₃.

The basic compound may be at least one selected from the group consisting of NaOH, Na₂CO₃, KOH, and Ca(OH)₂. The form of the precursor may vary depending on the type of the basic compound used. For example, when NaOH is used as a basic compound, the precursor in the form of a hydroxide can be obtained, and when Na₂CO₃ is used as a basic compound, the precursor in the form of a carbonate can be obtained. Further, when a basic compound and an oxidizing agent are used together, the precursor in the form of an oxide can be obtained.

On the other hand, the transition metal precursor and the lithium raw material can be mixed in an amount such that the molar ratio of total transition metals (Ni+Co+Mn):Li is 1 : 1.1 ~ 1: 1.5, preferably 1 : 1.15 ~ 1 : 1.4, and more preferably 1 : 1.25 ~ 1 : 1.4.

Meanwhile, the firing may be performed at a temperature of 600°C to 1000°C, or 700°C to 950°C, and the firing time may be 5 hours to 30 hours, or 5 hours to 20 hours. The firing atmosphere may be an air atmosphere or an oxygen atmosphere, which may be, for example, an atmosphere containing oxygen at 20 ~ 100% by volume.

### (B) Step of forming a carbon material coating layer on the surface of the lithium-rich manganese-based oxide

Next, the lithium-rich manganese-based oxide and a carbon material are mixed to form a carbon material coating layer located on the surface of the lithium-rich manganese-based oxide , wherein the content of the carbon material coating layer is 0.5 parts by weight to 10 parts by weight based on 100 parts by weight of the lithium-rich manganese-based oxide. Preferably it may be 1 part by weight to 8 parts by weight, more preferably 1 part by weight to 6 parts by weight.

According to an embodiment of the present disclosure, the carbon material coating layer may be formed on the surface of the lithium-rich manganese-based oxide by applying a shearing force. The formation of the carbon material coating layer may be performed, for example, by physical methods such as mechanofusion, mixing, milling, or the like.

The step of forming the carbon material coating layer may not pass through a separate heat treatment process. By not passing through a heat treatment process in this way, the positive electrode active material according to one aspect of the present disclosure can be manufactured by using only a simple process. In addition, by not passing through a separate heat treatment process, the oxidation number or structure of the transition metal compound may not be changed. Thereby, a positive electrode active material with few side reactions can be manufactured.

### Positive electrode

Next, the positive electrode according to the present disclosure will be described.

The positive electrode according to the present disclosure includes lithium-rich manganese-based oxide represented by Chemical Formula 1 as a positive electrode active material. Specifically, the positive electrode of the present disclosure includes a positive electrode current collector and a positive electrode active material layer formed on the positive electrode current collector, wherein the positive electrode active material layer includes the positive electrode active material according to the present disclosure. Since the positive electrode active material has been described above, a detailed description thereof will be omitted, and only the remaining components will be described in detail below.

The positive electrode current collector may contain a metal with high conductivity, and the positive electrode active material layer is easily adhered, but is not particularly limited as long as it has no reactivity within the voltage range of the battery. As the positive electrode current collector, for example, stainless steel, aluminum, nickel, titanium, heat-treated carbon, or aluminum or stainless steel of which surface is treated with carbon, nickel, titanium, silver, or the like may be used. The positive electrode current collector may generally have a thickness of 3 µm to 500 µm, and the positive electrode current collector may have fine protrusions and depressions formed on a surface thereof to enhance adherence of a positive electrode active material. For example, the positive electrode current collector may be used in various forms such as a film, a sheet, a foil, a net, a porous body, a foaming body, and a non-woven fabric structure.

The positive electrode active material layer may optionally include a conductive material and a binder as necessary, along with the positive electrode active material.

At this time, the positive electrode active material may be contained in an amount of 80% by weight to 99% by weight, more specifically, 90% by weight to 98% by weight, based on the total weight of the positive electrode active material layer.

The conductive material is used to impart conductivity to the electrode, and the conductive material can be used without particular limitation as long as it has electronic conductivity without causing chemical changes in the battery to be configured. Specific examples thereof include graphite such as natural graphite and artificial graphite; carbon-based materials such as carbon black, acetylene black, ketjen black, channel black, furnace black, lamp black, thermal black, and carbon fiber; metal powder or metal fibers such as copper, nickel, aluminum and silver; conductive tubes such as carbon nanotube; conductive whiskey such as zinc oxide and potassium titanate; conductive whiskers such as zinc oxide whiskers and potassium titanate whiskers; conductive metal oxides such as titanium oxide; or a conductive polymer such as a polyphenylene derivative, and any one type alone or a mixture of two or more types of them can be used. The conductive material may be contained in an amount of 0.01% by weight to 10% by weight, preferably 0.1% by weight to 9% by weight, and more preferably 0.1% by weight to 5% by weight, based on the total weight of the negative electrode active material layer.

Further, the binder serves to improve adhesion between the positive electrode active material particles and adhesive force between the positive active material and the current collector. Specific examples thereof may include polyvinylidene fluoride(PVDF), a polyvinylidenefluoridehexafluoropropylene copolymer(PVdF-co-HFP), polyvinyl alcohol, polyacrylonitrile, polymethymethaxrylate, carboxymethylcellulose(CMC), starch, hydroxypropylcellulose, regenerated cellulose, polyvinylpyrrolidone, tetrafluoroethylene, polyethylene, polypropylene, ethylene-propylene-diene polymer (EPDM), sulfonated EPDM, styrene-butadiene rubber(SBR), fluorine rubber, polyacrylic acid, and a polymer having the hydrogen thereof substituted with Li, Na, or Ca, or various copolymers thereof, and any one type alone or a mixture of two or more types of them can be used. The binder may be contained in an amount of 1% by weight to 30% by weight, preferably 1% by weight to 20% by weight, and more preferably 1% by weight to 10% by weight, based on the total weight of the positive electrode active material layer.

### Lithium secondary battery

Next, the lithium secondary battery according to the present disclosure will be described.

The lithium secondary battery includes a positive electrode, a negative electrode located opposite to the positive electrode, a separator interposed between the positive electrode and the negative electrode, and electrolyte.

Meanwhile, the positive electrode according to the present disclosure may have an electrode density of about 2.5 g/cc to 3.8 g/cc, 2.5 g/cc to 3.5 g/cc, or 2.8 g/cc to 3.2 g/cc. When the electrode density of the positive electrode satisfies the above range, high energy density can be achieved.

As described above, the lithium secondary battery of the present disclosure to which lithium-rich manganese-based oxide represented by Chemical Formula 1 is applied as the positive electrode active material can stably drive the cell even when the end voltage of charge is set as high as 4.3V ~ 4.6V during driving of a battery, thereby realizing high capacity characteristics.

In addition, the positive electrode is the same as the contents described above, and thus, a detailed description thereof will be omitted, and only the remaining components will be described in detail below.

On the other hand, the negative electrode according to the present disclosure includes a negative electrode current collector and a negative electrode active material layer located on the negative electrode current collector.

The negative electrode current collector is not particularly limited as long as it has high conductivity without causing a chemical change in the battery, and, for example, copper, stainless steel, aluminum, nickel, titanium, heat-treated carbon, or copper or stainless steel of which surface is treated with carbon, nickel, titanium, silver, or the like, an aluminum-cadmium alloy, or the like can be used. Further, the negative electrode current collector may generally have a thickness of 3 µm to 500 µm. Also, similar to the positive electrode current collector, the negative electrode current collector may have fine protrusions and depressions formed on a surface thereof to enhance adherence of a negative electrode active material. For example, the negative electrode current collector may be used in various forms such as a film, a sheet, a foil, a net, a porous body, a foaming body, and a non-woven fabric structure.

The negative electrode active material layer optionally includes a binder and a conductive material along with the negative electrode active material.

As the negative electrode active material, a compound capable of reversible intercalation and deintercalation of lithium can be used. Specific examples thereof may include a carbonaceous material such as artificial graphite, natural graphite, graphitized carbon fiber or amorphous carbon; a metallic compound capable of alloying with lithium, such as Si, Al, Sn, Pb, Zn, Bi, In, Mg, Ga, Cd, Si alloy, Sn alloy, or Al alloy; metal oxides capable of doping and de-doping lithium, such as SiO β (0< β < 2), SnO₂, vanadium oxide, and lithium vanadium oxide; a composite containing the metallic compound and the carbonaceous material, such as Si-C composite or Sn-C composite, and any one alone or a mixture of two or more thereof can be used. Further, a metallic lithium thin film may be used as the negative electrode active material. Further, both low-crystalline carbon and highly-crystalline carbon can be used as the carbon material. Typical examples of the low-crystalline carbon include soft carbon and hard carbon. Typical examples of the highly-crystalline carbon include amorphous, plate-like, flaky, spherical or fibrous natural graphite or artificial graphite, kish graphite, pyrolytic carbon, mesophase pitch-based carbon fiber, mesocarbon microbeads, high-temperature heat-treated carbon such as mesophase pitches and petroleum or coal tar pitch derived cokes.

The negative electrode active material may be contained in an amount of 80% by weight to 99% by weight, 82% by weight to 99% by weight, or 84% by weight to 99% by weight based on the total weight of the negative electrode active material layer.

The binder is a component that assists in the binding between the conductive material, the active material and the current collector, and is usually added in an amount of 0.1% by weight to 10% by weight based on the total weight of the negative electrode active material layer. Examples of such a binder may include polyvinylidene fluoride(PVDF), polyvinyl alcohol, carboxymethyl cellulose(CMC), starch, hydroxypropylcellulose, regenerated cellulose, polyvinyl pyrrolidone, polytetrafluoroethylene, polyethylene, polypropylene, an ethylene-propylene-diene monomer(EPDM), a sulfonated EPDM, styrene butadiene rubber, nitrile butadiene rubber, fluoro rubber, or various copolymers thereof.

The conductive material is a component that further improves the conductivity of the negative electrode active material, and may be included in an amount of 1% by weight to 30% by weight, 1% by weight to 20% by weight, or 1% by weight to 10% by weight based on the total weight of the negative electrode active material layer. Such a conductive material is not particularly limited as long as it has conductivity without causing a chemical change in the battery, and, for example, graphite such as natural graphite and artificial graphite; carbon black such as acetylene black, ketjen black, channel black, furnace black, lamp black, or thermal black; conductive fibers such as carbon fibers or metal fibers; fluorinated carbon; metal powder such as aluminum powder, and nickel powder; conductive whiskers such as zinc oxide whiskers and potassium titanate whiskers; conductive metal oxide such as titanium oxide; or polyphenylene derivatives, can be used.

The negative electrode active material layer may be prepared by applying a negative electrode slurry composition, which is prepared by dissolving or dispersing a negative electrode active material and optionally a binder and a conductive material in a solvent, onto a negative electrode current collector, followed by drying. Alternatively, the negative electrode active material layer may be prepared by casting the negative electrode slurry composition on a separate support, and then laminating a film peeled off from the support on a negative electrode current collector.

Meanwhile, the separator according to the present disclosure is to separate the negative electrode and the positive electrode and to provide a movement path for lithium ions. Any separator may be used without particular limitation as long as it is typically used as a separator in a lithium secondary battery. Particularly, a separator having high moisture-retention ability for an electrolyte as well as low resistance to the movement of electrolyte ions is preferable. Specifically, a porous polymer film, for example, a porous polymer film produced using a polyolefin-based polymer such as an ethylene homopolymer, a propylene homopolymer, an ethylene/butene copolymer, an ethylene/hexene copolymer, and an ethylene/methacrylate copolymer, or a laminated structure having two or more layers thereof may be used. Further, a typical porous non-woven fabric, for example, a non-woven fabric formed of glass fiber having a high melting point, polyethylene terephthalate fiber, or the like may be used. Further, a coated separator including a ceramic component or a polymer material may be used to secure heat resistance or mechanical strength, and may be selectively used in a single-layered or a multi-layered structure.

In addition, the electrolyte used in the present disclosure may be an organic liquid electrolyte, an inorganic liquid electrolyte, a solid polymer electrolyte, a gel-type polymer electrolyte, a solid inorganic electrolyte, a molten-type inorganic electrolyte, and the like, all of which may be used in the manufacturing of a lithium secondary battery, but is not limited thereto.

Specifically, the electrolyte may include an organic solvent and a lithium salt.

Any organic solvent may be used without particular limitation as long as it may serve as a medium through which ions involved in an electrochemical reaction of a battery can move. Specifically, as the organic solvent, an ester-based solvent such as methyl acetate, ethyl acetate, γ-butyrolactone, and ε-caprolactone; an ether-based solvent such as dibutyl ether or tetrahydrofuran; a ketone-based solvent such as cyclohexanone; an aromatic hydrocarbon-based solvent such as benzene and fluorobenzene; a carbonate-based solvent such as dimethyl carbonate (DMC), diethyl carbonate(DEC), methylethyl carbonate(MEC), ethylmethyl carbonate(EMC), ethylene carbonate(EC), and propylene carbonate (PC); an alcohol-based solvent such as ethyl alcohol and isopropyl alcohol; nitriles such as R-CN (where R is a linear, branched, or cyclic hydrocarbon group having 2 to 20 carbon atoms, and may include a double-bond aromatic ring or ether bond); amides such as dimethylformamide; dioxolanes such as 1,3-dioxolane; or sulfolanes can be used. Among these solvents, a carbonate-based solvent is preferable, and a mixture of a cyclic carbonate (e.g., ethylene carbonate or propylene carbonate) having a high ionic conductivity and a high dielectric constant and a linear carbonate-based compound having a low viscosity (e.g., ethylmethyl carbonate, dimethyl carbonate, or diethyl carbonate), which can increase charging/discharging performance of a battery, is more preferable.

The lithium salt can be used without particular limitation as long as it may provide lithium ions used in a lithium secondary battery. Specifically, the anion of the lithium salt may be at least one selected from the group consisting of F⁻, Cl⁻, Br⁻, I⁻, NO₃⁻, N(CN)₂⁻, BF₄⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, (CF₃CF₂SO₂)₂N⁻, or the like. As the lithium salt, LiPF₆, LiClO₄, LiAsF₆, LiBF₄, LiSbF₆, LiAl0₄, LiAlCl₄, LiCF₃SO₃, LiC₄F₉SO₃, LiN(C₂F₅SO₃)₂, LiN(C₂F₅SO₂)₂, LiN(CF₃SO₂)₂. LiCl, LiI, LiB(C₂O₄)₂, or the like can be used. The lithium salt may be used in a concentration range of 0.1 M to 4.0 M, preferably 0.5M to 3.0M, and more preferably 1.0M to 2.0M. When the concentration of the lithium salt is included within the above range, the electrolyte has suitable conductivity and viscosity, thereby exhibiting excellent electrolyte performance, and lithium ions can effectively move.

In order to improve the life characteristics of a battery, suppress the decrease in battery capacity, and improve the discharge capacity of the battery, the electrolyte may, in addition to the electrolyte components, further include one or more kinds of additives, for example, a haloalkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, and the like. At this time, the additive may be included in an amount of 0.1 to 10 parts by weight based on a total weight of the electrolyte.

The lithium secondary battery including the positive electrode material according to the present disclosure as described above stably exhibits excellent discharging capacity, output properties, and capacity retention, and thus, are useful for portable devices such as a mobile phone, a notebook computer, and a digital camera, and in the field of electric vehicles such as a hybrid electric vehicle(HEV).

Therefore, according to another embodiment of the present disclosure, a battery module including the lithium secondary battery as a unit cell, and a battery pack including the same are provided.

The battery module or the battery pack can be used as a power source of one or more medium-and-large-sized devices, for example, a power tool, an electric vehicle such as an electric vehicle(EV), a hybrid electric vehicle, and a plug-in hybrid electric vehicle(PHEV), or a power storage system.

Hereinafter, embodiments of the present disclosure have been described in detail above, so that those skilled in the technical field to which the invention belongs can easily carry out them. However, the present disclosure can be modified into other various forms, and the scope thereof is not limited to the embodiments set forth herein.

### Examples and Comparative Examples

### Example 1

Ni_{0.33}Mn_{0.67}(OH)₂ and Li₂CO₃ were mixed so that the Li/transition metal molar ratio was 1.3:1, and fired at 900°C for 10 hours to prepare a lithium-rich manganese-based oxide (Li_{1.13}Ni_{0.31}Mn_{0.56}O₂) having a D₅₀ of 10 µm.

The lithium-rich manganese-based oxide thus prepared was added to water at 25°C at a ratio of 1:5, and the mixture was stirred at room temperature for 20 minutes, and then only the lithium-rich manganese-based oxide was filtered out and dried at 120°C.

Subsequently, the lithium-rich manganese-based oxide and ketjen black were mixed at a weight ratio of 96:4, and then put into a Nobilta mixer and milled at a rotation speed of 2000 rpm for 10 minutes to manufacture a positive electrode active material in which a ketjen black carbon material was coated onto the surface of the lithium-rich manganese-based oxide.

### Example 2

A positive electrode active material in which a ketjen black carbon material was coated onto the surface of the lithium-rich manganese-based oxide was manufactured in the same manner as in Example 1, except that lithium-rich manganese-based oxide and ketjen black were mixed at a weight ratio of 92:8.

### Comparative Example 1

A positive electrode active material in which a ketjen black carbon material was not coated onto the surface of the lithium-rich manganese-based oxide obtained in Example 1 was manufactured.

### Comparative Example 2

A positive electrode active material in which a ketjen black carbon material was coated onto the surface of the lithium-rich manganese-based oxide was manufactured in the same manner as in Example 1, except that lithium-rich manganese-based oxide and ketjen black were mixed at a weight ratio of 99.8 : 0.2.

### Comparative Example 3

A positive electrode active material in which a ketjen black carbon material was coated onto the surface of the lithium-rich manganese-based oxide was manufactured in the same manner as in Example 1, except that lithium-rich manganese-based oxide and ketjen black were mixed at a weight ratio of 88 : 12.

### Experimental Example 1: Measurement of specific surface area of positive electrode active material

The specific surface areas of the positive electrode active materials of Examples 1 to 2 and Comparative Examples 1 to 3 were measured.

Specifically, the specific surface area was measured by a BET method. Specifically, the specific surface area thereof was calculated from the adsorption amount of nitrogen gas under a liquid nitrogen temperature (77K) using a specific surface area measuring device (model name: BELSORP-mini II, available from BEL Japan Inc.). The results obtained at this time are shown in Table 1 below.

**[Table 1]**

| | Composition (lithium-rich manganese-based oxide : ketjen black) | Specific surface area (m²/g) |
|---|---|---|
| Example 1 | 96 : 4 | 1.1 |
| Example 2 | 92 : 8 | 1.4 |
| Comparative Example 1 | - | 0.8 |
| Comparative Example 2 | 99.8 : 0.2 | 0.8 |
| Comparative Example 3 | 88 : 12 | 2.1 |

As shown in Table 1, it can be confirmed that the positive electrode active materials of Examples 1 and 2 include a carbon material coating layer with a specific content, and thus have a large specific surface area, as compared to the case where no carbon material coating layer was formed (Comparative Example 1) and the case where the content of the carbon material coating layer was less than 0.5 parts by weight based on 100 parts by weight of the lithium-rich manganese-based oxide (Comparative Example 2).

Specifically, it can be confirmed that the positive electrode active materials of Examples 1 and 2 satisfy the BET specific surface area of 1.0 m²/g to 2.0 m²/g. Thereby, the reaction area with the electrolyte is sufficient and thus can achieve sufficient capacity, and side reactions with the electrolyte are not accelerated during driving of an electrode, thereby ensuring life characteristics.

On the other hand, when the content of the carbon material coating layer exceeds 10 parts by weight based on 100 parts by weight of the lithium-rich manganese-based oxide (Comparative

Example 3), the specific surface area is larger than that of Examples, but the rate characteristics may be reduced as will be seen in Experimental Example 3 below.

### Experimental Example 2: Measurement of electrical conductivity

The electrical conductivity of the positive electrode active materials of Examples 1 to 2 and Comparative Examples 1 to 3 was measured after rolling under 2 ton conditions. The measurement results are shown in Table 2 below.

The electrical conductivity was measured using a powder resistivity meter. Specifically, 5 g of the positive electrode active material manufactured in each of Examples and Comparative Examples was put into a cylindrical 4-pin probe mold, and then the mold containing the positive active material was pressed with 2 tons, the powder resistance was measured, and the electrical conductivity was calculated.

**[Table 2]**

| | Electrical conductivity (S/cm) |
|---|---|
| Example 1 | 2.3 x 10⁻³ |
| Example 2 | 3.5 x 10⁻³ |
| Comparative Example 1 | 1.7 x 10⁻³ |
| Comparative Example 2 | 1.9 x 10⁻³ |
| Comparative Example 3 | 6.2 x 10⁻³ |

As shown in Table 2, it can be confirmed that the electrical conductivity of Example 1 increased by 1.35 times and the electrical conductivity of Example 2 by 2.06 times as compared to the case where no carbon material coating layer not formed (Comparative Example 1).

Specifically, the electrical conductivity of Examples 1 and 2 satisfies 2.0×10⁻³ S/cm to 5.0×10⁻³ S/cm.

On the other hand, when the content of the carbon material coating layer exceeds 10 parts by weight based on 100 parts by weight of the lithium-rich manganese-based oxide (Comparative Example 3), the electrical conductivity is higher than that of Examples, but he rate characteristics are decreased as will be seen in Experimental Example 3.

### Experimental Example 3: Evaluation of capacity characteristics and rate characteristics

The capacity characteristics and rate characteristics of the lithium secondary battery half-cells manufactured as follows using the positive electrode active materials of Examples 1 to 2 and Comparative Examples 1 to 3 were evaluated by the following method. The measurement results are shown in Table 3 below.

Specifically, the lithium secondary battery half-cells were manufactured as follows.

The positive electrode active material manufactured in each of Examples 1 to 2 and Comparative Examples 1 to 3, a conductive material (Super-C), and a PVDF binder were mixed in N-methylpyrrolidone at the weight ratio shown in Table 3 below to prepare a positive electrode slurry. Then, the positive electrode slurry was applied onto an aluminum current collector sheet, dried, and rolled to manufacture a positive electrode.

The half-cells of Example 1-1, Example 2-1, and Comparative Examples 1-1 to 3-1 were manufactured by applying the positive electrode manufactured as above, and a lithium metal thin film as the negative electrode. Subsequently, each of the half-cells was charged at 0.1C constant current at 45°C until the voltage became 4.65V, and then discharged at 0.1C constant current until the voltage became 2.0V to perform an activation process.

Then, the half-cell in which the activation process was completed was charged at 0.1C constant current at 25°C until the voltage became 4.4V, and then discharged at 0.1C constant current until the voltage became 2.5V to measure the charge capacity and the discharge capacity. At the same temperature, charging was performed at 0.33C constant current until the voltage became 4.4V and then discharging was performed at 0.33C constant current until the voltage became 2.5V to measure the charge capacity and the discharge capacity.

The rate characteristics were measured as the ratio of the discharge capacity during the 0.33C charging and discharging to the discharge capacity during the 0.1C charging and discharging as measured above.

**[Table 3]**

| | Types of active materials | Electrode composition (active material: conductive material: binder) | Discharge capacity during the 0.1C/0.1C charging and discharging (mAh/g) | Discharge capacity during the 0.33C/0.33C charging and discharging (mAh/g) | 0.33C discharging capacity/0.1C discharging capacity |
|---|---|---|---|---|---|
| Example 1-1 | Example 1 | 94 : 3 : 3 | 205 | 196 | 95.6 |
| Example 2-1 | Example 2 | 94 : 3 : 3 | 205 | 193 | 94.1 |
| Comparative Example 1-1 | Comparative Example 1 | 94 : 3 : 3 | 205 | 190 | 92.7 |
| Comparative Example 1-2 | Comparative Example 1 | 90 : 7 : 3 | 205 | 192 | 93.7 |
| Comparative Example 2-1 | Comparative Example 2 | 94 : 3 : 3 | 205 | 192 | 92.9 |
| Comparative Example 3-1 | Comparative Example 3 | 94 : 3 : 3 | 205 | 185 | 91.8 |

From Table 3, it can be confirmed that the half-cells of Examples 1-1 and 2-1 applying the positive electrode active material with a carbon material coating layer formed exhibit high rate characteristics compared to the half-cells of Comparative Example 1-1 and Comparative Example 1-2 applying a positive electrode active material without a carbon material coating layer formed. Specifically, the half-cells of Examples 1-1 and 2-1 satisfy the ratio of the discharge capacity during the 0.33C charging and discharging to the discharge capacity during the 0.1C charging and discharging of the lithium secondary battery, of 94.0% to 99.0%. This is considered to be because the electrical conductivity of the positive electrode active material is improved by the carbon material coating layer, thereby lowering electrode resistance and improving rate characteristics.

However, it can be seen that the half-cell of Comparative Example 3-1 applying a positive electrode active material in which the content of the carbon material coating layer exceeds the range of the present disclosure is deteriorated in rate characteristics. This is judged to be because as the content of the carbon material coating layer increases, the electrical conductivity is increased (see Table 2), but lithium ions cannot directly pass through the carbon material coating layer, and also must move through the electrolyte filled in the carbon material coating layer. whereby as the content of the carbon material coating layer is higher, the internal curvature is higher, which impedes the movement of lithium ions, and this effect is reflected in the decrease in rate characteristics.

On the other hand, considering the content of the carbon material coating layer and the conductive material, it was judged that the carbon material coating layer can function as an additional conductive material under the same electrode composition, so that the half-cell of Comparative Example 1-2, which was manufactured by increasing the content of the conductive material in the electrode, was compared with Example 1. As a result, it was judged that the electrode electrical conductivity is improved due to the increase in the content of the conductive material compared to before the electrode composition is changed (Comparative Example 1-1), which has an effect on improving the rate characteristics, but it can be confirmed that the rate characteristics are still lower compared to the half cells of Example 1-1 and Example 2-1. Therefore, it is judged that directly coating the surface of the electrode with a carbon material is effective in improving the rate characteristics, rather than increasing the content of the conductive material in the electrode composition.

## Claims

1. A positive electrode active material comprising:
a lithium-rich manganese-based oxide represented by the following Chemical Formula 1; and
a carbon material coating layer located on the surface of the lithium-rich manganese-based oxide,
wherein a BET specific surface area is 1.0 m²/g to 2.0 m²/g:
[Chemical Formula 1] Liₐ[Ni_{b}Co_{c}Mn_{d}Mₑ]O₂
in Chemical Formula 1, 1.00<a, 0≤b≤0.53, 0≤c≤0.10, 0.47≤d≤1.00, 0≤e≤0.20, and M is at least one selected from the group consisting of Al, B, Co, W, Mg, V, Ti, Zn, Ga, In, Ru, Nb, Sn, Sr and Zr.

2. The positive electrode active material of claim 1, wherein:
in Chemical Formula 1, 1.10≤a≤1.5, 0.10≤b≤0.40, 0≤c≤0.05, 0.47≤d≤0.80, and 0≤e≤0.10.

3. The positive electrode active material of claim 1, wherein:
in Chemical Formula 1, 1.12<a<1.18, 0.24<b<0.36, 0<c<0.10, 0.47≤d<0.63, 0<e<0.05, and M is at least one selected from the group consisting of Al, Mg, V, Ti, Zr, Nb and W.

4. The positive electrode active material of claim 1, wherein:
the lithium-rich manganese-based oxide is represented by the following Chemical Formula 2:
[Chemical Formula 2] X Li₂MnO₃ · (1-X)Li[Ni_{l-y-z-w}Mn_{y}Co_{z}M_{w}]O₂
in Chemical Formula 2, 0.2≤X≤0.5, 0.4≤y<1, 0≤z≤0.1, 0≤w≤0.2, and M is at least one selected from the group consisting of Al, B, Co, W, Mg, V, Ti, Zn, Ga, In, Ru, Nb, Sn, Sr and Zr.

5. The positive electrode active material of claim 1, wherein:
the carbon material coating layer is amorphous.

6. The positive electrode active material of claim 1, wherein:
the carbon material coating layer includes at least one selected from the group consisting of carbon nanotubes, carbon nanofibers, carbon nanoribbons, carbon nanobelts, carbon nanorods, graphene, graphene oxide, reduced graphene oxide, carbon black, activated carbon and mesoporous carbon.

7. The positive electrode active material of claim 1, wherein:
the content of the carbon material coating layer is 0.5 parts by weight to 10 parts by weight based on 100 parts by weight of the lithium-rich manganese-based oxide.

8. The positive electrode active material of claim 1, wherein:
the positive electrode active material has a D₅₀ of 1 µm to 20 µm.

9. The positive electrode active material of claim 1, wherein:
the positive electrode active material has an electrical conductivity of 2.0×10⁻³ S/cm to 5.0×10⁻³ S/cm.

10. A positive electrode comprising the positive electrode active material of any one of claims 1 to 9.

11. A lithium secondary battery comprising a positive electrode, a negative electrode, a separator and an electrolyte,
wherein the positive electrode includes a positive electrode active material layer containing the positive electrode active material of any one of claims 1 to 9.

12. The lithium secondary battery of claim 11, wherein:
the ratio of the discharge capacity during the 0.33C charging and discharging to the discharge capacity during the 0.1C charging and discharging of the lithium secondary battery is 94.0% to 99.0%.

13. A method for manufacturing a positive electrode active material, the method comprising the steps of:
(A) preparing a lithium-rich manganese-based oxide represented by the following Chemical Formula 1; and
(B) forming a carbon material coating layer located on the surface of the lithium-rich manganese-based oxide by mixing the lithium-rich manganese-based oxide and a carbon material,
wherein the content of the carbon material coating layer is 0.5 parts by weight to 10 parts by weight based on 100 parts by weight of the lithium-rich manganese-based oxide:
[Chemical Formula 1] Liₐ[Ni_{b}Co_{c}Mn_{d}Mₑ]O₂
in Chemical Formula 1, 1.00<a, 0≤b≤0.53, 0≤c≤0.10, 0.47≤d≤1.00, 0≤e≤0.20, and M is at least one selected from the group consisting of Al, B, Co, W, Mg, V, Ti, Zn, Ga, In, Ru, Nb, Sn, Sr and Zr.

14. The method for manufacturing a positive electrode active material of claim 13, wherein:
in step (B), the carbon material coating layer is formed on the surface of the lithium-rich manganese-based oxide by applying a shearing force.
